# EUROPEAN PATENT APPLICATION

(11) **EP 4 446 465 A1**
(43) Date of publication of application: **16.10.2024**
(21) Application number: 23167428.4
(22) Date of filing: 11.04.2023
(51) Int. Cl.: C25B 1/04, C25B 1/50, C25B 15/00

(54) **IRON-ENRICHED WATER ELECTROLYSIS**

(71) Applicant: Rijksuniversiteit Groningen, 9712 CP Groningen (NL)
(72) Inventor: POLI, Stefano, 9712 CP Groningen (NL); PESCARMONA, Paolo Prospero, 9712 CP Groningen (NL)
(74) Representative: V.O.

(57) **Abstract**

The invention is directed to a process for electrolyzing water in an electrolysis device, wherein said electrolysis device comprises an anode comprising nickel, a cathode, and a liquid alkaline electrolyte comprising iron in a concentration in the range of 0.01 to 500 ppm, wherein said process comprises intermittent electrolysis which comprises alternatingly an oxygen evolution reaction (OER) period of applying a overpotential such that an oxygen evolution reaction takes place, and a rejuvenating period of applying a rejuvenation potential that is lower than said overpotential.

## Description

The invention is in the field of water electrolysis. In particular, the invention is directed to conducting water electrolysis in a liquid alkaline electrolyte making use of a nickel-based anode.

Electrolysis of water to produce H₂ and O₂ can be used to convert electrical energy in storable chemical energy. In conventional electrolysis, water is electrolyzed by imposing a constant current through an alkaline electrolyte in an electrolysis device, also referred to as an electrolyzer (see for instance Zhang, L., Zhao, H., Wilkinson, D.P., Sun, X., & Zhang, J. (Eds.) (2020) Electrochemical Water Electrolysis: Fundamentals and Technologies (1st ed.) CRC Press). At larger scale, electrolyzers typically comprise multiple electrochemical cells connected in series. Each electrochemical cell features an anode, at which the oxygen evolution reaction (herein-abbreviated as OER; 4OH⁻→ 2H₂O + O₂ + 4e⁻) takes place, and a cathode, at which the hydrogen evolution reaction (herein-abbreviated as HER) takes place. The anode and the cathode are generally made of nickel or stainless steel, in the form of perforated plates or meshes. The anodic and cathodic compartments are separated by a membrane, or a diaphragm, that prevents oxygen and hydrogen from mixing. The electrolyte generally used is an aqueous solution of KOH at 70-80 °C (up to 30 wt%), that flows through the anodic and cathodic compartments.

Typical nickel-based electrodes that are conventionally applied contain nickel oxy-hydroxides at the electrode's surface. Although nickel-based anode and alkaline electrolytes favorably avoid the requirement of noble metals, it remains a challenge to achieve high catalytic activity of the anode in the OER. Trotochaud et al. (J. Am. Chem. Soc. 2014, 136, 18, 6744-6753) describe that the adsorption of Fe impurities enhances the activity of aged Ni-based (OER) electrocatalysts. Methods for incorporating iron in nickel-based electrodes is also described in for instance US2019256992A1 and US10975482B1. A drawback of this method is the complex preparation of these electrodes.

An alternative method to enhance the stability or decrease the deactivation of Ni-based electrodes is described by Mellsop et al. (Electrochimica Acta, 2015, 180, 501-506). It is described that electrode deactivation can be mitigated by temporarily decreasing the absolute value of the applied potential for brief periods.

Despite recent advantages, there remains the desire to a better understanding of electrocatalyst activity and deactivation, as well as to provide improved water electrolysis devices and processes.

An object of the present invention is to provide an improved process for electrolysis of water.

The present inventors found that by applying an overpotential that is alternated with a rejuvenating potential while the electrolyte contains iron at a certain concentration, deactivation of nickel-based anodes is greatly decreased.

Accordingly, the present invention is directed to a process for electrolyzing water in an electrolysis device, wherein said electrolysis device comprises an anode comprising nickel, a cathode, and a liquid alkaline electrolyte comprising iron in a concentration in the range of 0.01 to 500 ppm, wherein said process comprises intermittent electrolysis, which comprises alternatingly:
- an oxygen evolution reaction (OER) period of applying an overpotential between the anode and the cathode such that an OER takes place, and
- a rejuvenating period of applying a rejuvenation potential between the anode and the cathode which is lower than said overpotential.

The anode, cathode and electrolyte can be based on conventional configurations, as long as the electrolytes also contains a sufficient amount of iron. The anode (also referred to as the working electrode, abbreviated as WE) comprises nickel, preferably comprise nickel oxy-hydroxide. The cathode (also referred to as the counter electrode, abbreviated as CE) may comprise any suitable material to carry out the HER. In typical embodiments, the cathode comprises nickel or platinum.

Further, in a typical embodiment, the liquid electrolyte is a liquid alkaline electrolyte, which preferably comprises hydroxide, more preferably potassium hydroxide in a concentration of at least 0.01 mol/L, even more preferably at least 0.1 mol/L, yet even more preferably at least 1 mol/L, yet even more preferably at least 5 mol/L, most preferably at least 6 mol/L such as about 6.89 mol /L. Industrial conditions generally involve electrolytes with a KOH concentration of about 6 to about 7 mol/L, while lab scale conditions generally involve electrolytes with a KOH concentration of about 1 mol/L. Liquid alkaline electrolyte is preferable to use in electrolytic cell using diaphragms. When an electrolytic cell is used with an anionic exchange membrane (AEM), the liquid electrolyte may have a pH value in the range of 5-8 or even be neutral (pH of 7).

The electrolyte is typically maintained at temperature of more than 20 °C, preferably in the range of 50 °C to 90 °C such as about 70 °C to about 80 °C.

The term alkaline electrolyte used herein refers to an electrolyte having a pH value of at least 12, more preferably at least 13, most preferably at least 14 or even higher.

The term neutral electrolyte used herein refers to an electrolyte having a pH in the range of 5-10, preferably in the range of 6-8 such as about 7.

Iron ions have higher solubility in neutral electrolytes compared to alkaline electrolytes. In alkaline electrolytes, the solubility of the iron ions is generally limited to about 500 ppm. In neutral electrolytes the iron ions concentration may be much higher. For instance, the solubility of Fe₂(SO₄)₃ in water is 256 g/L (as the monohydrate).

The electrolyte comprises iron ions in a concentration of 0.01 to 500 ppm. The concentration may also be higher but is typically limited by the solubility of iron ions in the electrolyte. Preferably, the concentration of iron is in the range of 0.025 to 250 ppm. It may be appreciated that the concentration of iron may fluctuate during the process. The desired iron concentration can be obtained by adding an iron salt such as (but not limited to) Fe₂(SO₄)₃, Fe(NOs)s, FeX₃ with X being a halogen (Cl, Br, I) and/or Fe(CH₃CO₂)₃ to an aqueous solution used to prepare the electrolyte. While it is preferred to add the iron as Fe(III), the iron may also be added in other oxidation states. For reasons of the oxidative conditions, the iron is generally present as Fe(III) in the electrolyte during the process, and iron in other oxidative states are generally oxidized to Fe(III). If the iron concentration is obtained by adding an iron salt, the counter ion may remain in the electrolyte. Accordingly, the liquid electrolyte may comprise Cl⁻, Br, I⁻, SO₄²⁻, NO₃⁻ and/or CH₃CO₂⁻ in a concentration of about 0.015 to about 1500.

The term overpotential herein refers to a potential that is applied beyond the thermodynamic requirement that is needed to drive the OER at a certain rate. During the OER period, the overpotential is typically of a value to maintain a current density in the range of 50 mA to 1 A cm⁻², preferably in the range of 100 to 800 mA cm⁻² such as about 300 mA cm⁻². In typical embodiments, the anodic overpotential needed to achieve current density in such range are less than 2.0 V, preferably between 1.5 and 1.8 V, vs RHE. For example, in a preferred embodiment, the anodic overpotential of ≤ 1.8 V was set so that the current of 300 mA cm⁻² was maintained. The total overpotential needed to support a chosen current also depends on the overpotential for the HER and on cell Ohmic losses.

The rejuvenating potential is lower than the overpotential. In a typical embodiment, the rejuvenating potential is such that the current density at the anode is less than 10%, preferably less than 1% of the current density at the anode when applying the overpotential. Accordingly, during the rejuvenation period, the rejuvenation potential is typically of a value to maintain a current density in the range of 1 pA cm⁻² to 0.1 A cm⁻², preferably in the range of 5 pA cm⁻² to 0.50 mA cm⁻². In principle, there is no lower limit to the current density at the rejuvenating potential.

During the process, the OER and rejuvenating potentials are alternatingly applied. Typically, the OER potential is applied for a period of 1 to 3 hours, before the next rejuvenating potential is applied. The OER potential may however also be applied longer. In principle the OER is carried out as long as possible, *i.e.* as long as the OER activity does not decrease significantly. The period during which the OER is applied may also depend on the iron concentration at the start of the OER. That is, when the iron concentration was relatively high, the OER may be continued by a longer period when compared to a lower iron starting concentration. In most embodiments, the OER period is less than 24 hours, or less than 10 hours, or even in the range of 30 minutes to 5 hours.

The rejuvenating period is typically shorter than the OER period. As the OER typically ceases during the rejuvenating period, the rejuvenating period is typically optimized for the rejuvenation of the anode, *i.e.* the rejuvenating period preferably has a duration that is just sufficient to rejuvenate the anode, and not longer. Accordingly, the rejuvenating period is as short as possible and preferably less than 15 minutes, more preferably less than 10 minutes, even more preferably in the range of 10 seconds to 5 minutes, most preferably in the range of 30 seconds to 3 minutes.

Rejuvenation herein means that the deactivation of the anode is at least partially reversed. Deactivation of the anode means that a higher potential is required for a certain current density compared to when the anode is not (or less) deactivated. For instance, the anode may be deactivated to such extent that in order to maintain a current density of 300 mA/cm⁻², the potential increases from about 1.5 V (vs a reversible hydrogen electrode, abbreviated as RHE) to about 2.2 V (vs RHE).

The process of the present invention typically contains a plurality of OER and rejuvenating periods. Preferably, the intermittent electrolysis comprises at least five, preferably at least ten OER periods alternated by rejuvenating periods. Each of these OER periods and rejuvenating periods preferably has a duration as described herein-above. Furthermore, it is preferred that every OER period has the same length, although in some embodiments the duration may differ. For instance, if the rate of deactivation of the anode changes during the intermittent electrolysis, the end of the OER period and start of the rejuvenating period may appropriately be delayed or expedited. It is also preferred that every rejuvenating period has the same length, but similarly, in some embodiments the duration may differ. For instance, the duration of the rejuvenating period may appropriately be adjusted based on the amount of deactivation during a preceding OER period.

It may be appreciated that the electrolysis device for use in the present invention may be any electrochemical cell or series of electrochemical cells that are known to be suitable for the electrolysis of water under alkaline conditions. Cell design and general process parameters can for instance be found in Zhang, L., Zhao, H., Wilkinson, D.P., Sun, X., & Zhang, J. (Eds.) (2020). Electrochemical Water Electrolysis: Fundamentals and Technologies (1st ed.). CRC .

The invention can be illustrated by the following, non-limiting examples.

### Example 1 - intermittent electrolysis with an iron-containing KOH electrolyte

The experimental set-up comprises an H-cell with a water jacket surrounding it, a thermostat and a potentiostat. The anodic and cathodic compartments have a volume of approximately 36 mL each. The potentiostat used for all the experiments was a Gamry 1010E.

Water was recirculated from the thermostat to the jacket of the cell in order to keep a constant temperature of 30 °C during the experiments.

The H-cell was operated in a 3-electrode configuration, with the working electrode (WE) and the reference electrode (RE) in the anodic compartment, and the counter electrode (CE) in the cathodic compartment.

WE: Nickel wire (of which 1.2 cm, measured with a caliper, immersed in the electrolyte) was used for the experiments as working electrode (99.995% Ni, purchased from AlfaAesar, 0.5 mm diameter).

RE: The reference electrode was Hg/HgO 1M KOH (purchased from ALS). The measured potentials are referred to RHE.

CE: A Ni mesh or Pt mesh was used as counter electrode.

Selemion AHO or Zirfon Pearl UTP 500 was used as separator between the two compartments.

The electrolyte was a 1M KOH aqueous solution prepared by dissolving analytical grade KOH pellets (Supelco, declared iron content < 0.0005 %, with the iron content possibly varying from batch to batch and being typically > 10 ppb) in MilliQ water (16.2 MΩ). The electrolyte prepared in this way is referred to as *iron-containing KOH electrolyte.*

Intermittent electrolysis was carried out according to the following parameters:
- OER periods of 1h40min during which an overpotential was applied to maintain a current density of 300 mA/cm² ; alternated by
- rejuvenating periods of 2 minutes during which a potential of 1.48 V vs RHE was applied, which allowed to maintain a current density of ca. 10 µA/cm².

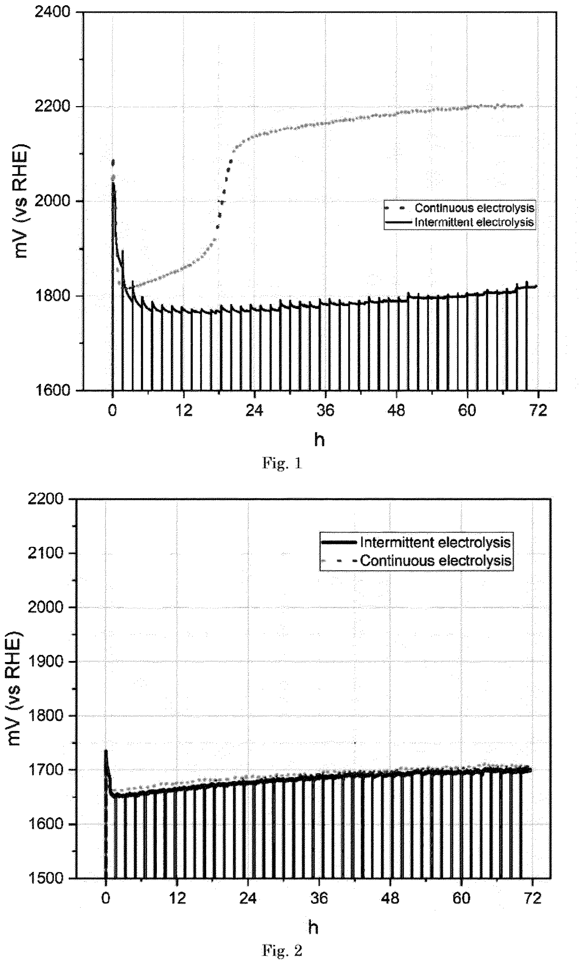

Figure 1 shows that the anode deactivated during the OER periods, while during the rejuvenating periods, the anode was rejuvenated.

### Example 2 - intermittent electrolysis with an iron-rich KOH electrolyte

Using the experimental setup and parameters as described in Example 1, with the difference that an iron-rich KOH electrolyte, intermittent electrolysis was carried out.

The *iron-rich KOH electrolyte* was prepared from the *iron-containing KOH electrolyte* (see Example 1) by addition of 10 pL of an aqueous solution containing 1800 ppm of Fe³⁺ (prepared from Fe(NOs)s). The addition was performed prior to each experiment, directly into the commercial KOH electrolyte placed in the anodic compartment (36 mL) of the H-cell. The resulting concentration of iron (as Fe³⁺) in the *iron-rich KOH electrolyte* was 5 ppm.

Figure 2 shows that when the Ni electrode is tested in the OER in 1M KOH in which additional Fe has been added (up to 5 ppm), the activity rapidly reached a maximum (much more rapidly than with the iron-containing KOH electrolyte) and remained almost stable in the tested time range (72 h). This activity was significantly higher (*i.e.* the potential needed to achieve the target current density is significantly lower) compared to the test with the *iron-containing KOH electrolyte.*

Looking at the intermittent electrolysis, rejuvenation by decreasing the current density to less than 1% of the nominal current does not have a clear influence on the activity of the electrode.

### Comparative Example 1 - continuous and intermittent electrolysis with an iron-lean KOH electrolyte

Using the experimental setup and parameters as described in Example 1, with the difference that an iron-lean KOH electrolyte (*i.e.* a KOH electrolyte with the iron concentration ≤10 ppb was used, intermittent and continuous electrolysis was carried out in two separated experiments.

The *iron-lean KOH electrolyte* was prepared starting from the *iron-containing KOH electrolyte* by following the purification procedure described by Trotochaud et al. J. Am. Chem. Soc. 136, 6744-6753 (2014). The procedure involves the precipitation of Ni(OH)₂ from Ni(NO₃)₂. Approximately 2 g of Ni(NO₃)₂ were dissolved in 4 mL of MilliQ water inside a 50 mL polypropylene centrifuge tube, to which 20 mL of 1M KOH aqueous solution were then added to cause the precipitation of Ni(OH)₂ . Ni(OH)₂ precipitated forming a powder, which was separated and recovered by centrifugation, followed by removal of the supernatant (which was discarded). The obtained Ni(OH)₂ (as a wet powder) was washed by adding 20 mL of MilliQ water and 2 mL of 1 M KOH solution to the centrifuge tube, redispersing the solid by shaking (manually), centrifuging and removing the supernatant. This step was repeated 3 times. The purified Ni(OH)₂ thus prepared was subsequently used to remove the iron impurities from the commercial KOH electrolyte. For this purpose, approximately 45 mL of the commercial KOH was introduced in a centrifuge tube containing the formerly prepared Ni(OH)₂, shaken vigorously (manually) until a homogeneous suspension was achieved, allowed to decant for at least 3 h, centrifuged at 4000 rpm for 4 min to separate the Ni(OH)₂ by settling it at the bottom of the tube. The supernatant *iron-lean KOH electrolyte* was then poured into the cell.

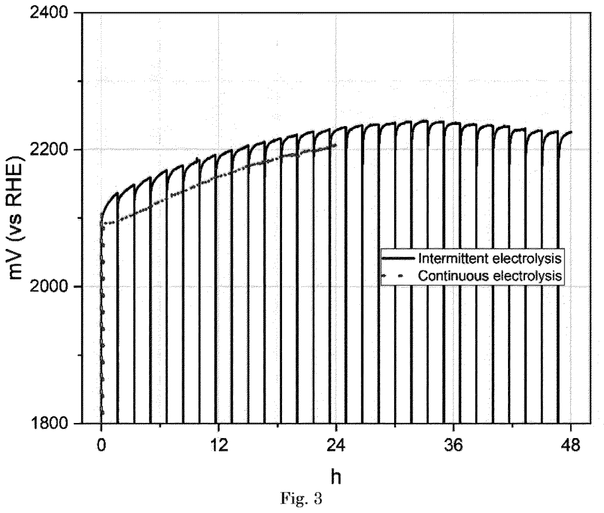

Figure 3 shows that the anode deactivates very rapidly, *i.e.* the potential needed to achieve the target current density 300 mA/cm², increased dramatically within the first minutes in both electrolysis experiments. Moreover, intermittent electrolysis including rejuvenation by decreasing the current density to less than 1% of the nominal current does not have an influence on the activity of the electrode.

## Claims

1. Process for electrolyzing water in an electrolysis device, wherein said electrolysis device comprises an anode comprising nickel, a cathode, and a liquid electrolyte comprising iron in a concentration in the range of 0.01 to 500 ppm, wherein said process comprises intermittent electrolysis which comprises alternatingly
- an oxygen evolution reaction (OER) period of applying an overpotential between the anode and the cathode such that oxygen evolution reaction takes place, and
- a rejuvenating period of applying a rejuvenation potential between the anode and the cathode which is lower than said overpotential.

2. Process according to claim 1, wherein the rejuvenating potential is such the current density at the anode is less than 10%, preferably less than 1% of the current density at the anode when applying the overpotential.

3. Process according to any of the previous claims, wherein said rejuvenating period is less than 30 minutes, preferably less than 15 minutes, more preferably less than 10 minutes, even more preferably in the range of 5 seconds to 5 minutes, most preferably in the range of 20 seconds to 3 minutes.

4. Process according to any of the previous claims, wherein said OER period is at least 30 minutes, preferably at least 3 hours, more preferably at least 24 hours, most preferably at least 72 hours.

5. Process according to any of the previous claims, wherein the intermittent electrolysis comprises at least five, preferably at least ten OER periods alternated by rejuvenating periods, which OER and/or rejuvenating periods preferably each have a duration as defined in claims 3 and 4.

6. Process according to any of the previous claims, wherein the liquid electrolyte is a liquid alkaline electrolyte and preferably wherein the liquid alkaline electrolyte comprises hydroxide, preferably potassium hydroxide in a concentration of at least 0.01 mol/L, preferably at least 0.1 mol/L, more preferably at least 1 mol/L, even more preferably at least 5 mol/L, most preferably at least 6 mol/L such as about 6.89 mol /L.

7. Process according to any of the previous claims, wherein the liquid electrolyte comprises iron in a concentration in the range of 1 to 250 ppm.

8. Process according to any of the previous claims, wherein the iron comprises Fe(II) and/or Fe(III), preferably Fe(II).

9. Process according to any of the previous claims, wherein the iron concentration in the liquid electrolyte is achieved by adding Fe₂(SO₄)₃, Fe(NOs)s, FeX₃ with X being a halogen (Cl, Br, I) and/or Fe(CH₃CO₂)₃.

10. Process according to any of the previous claims, wherein the liquid electrolyte comprises Cl, Br, I, SO₄²⁻, NO₃⁻ and/or CH₃CO₂⁻ in a concentration of about 0.015 to about 1500.

11. Process according to any of the previous claims, wherein the anode is nickel-based and comprises a nickel oxy-hydroxide, and/or the cathode comprises nickel and/or platinum.

12. Process according to any of the previous claims, wherein the OER period comprises maintaining a current density in the range of 100 mA cm⁻² or more.

13. Process according to any of the previous claims, wherein the rejuvenation period comprises maintaining a current density of 10 mA cm⁻² or lower, preferably in the range of 1 pA to 3 mA cm⁻², preferably in the range of 5 pA to 0.50 mA cm⁻² such as about 0.30 mA cm⁻².

14. Process according to any of the previous claims, wherein the OER period comprises maintaining a potential of less than 2.0 V, preferably between 1.5 and 1.8 V, vs RHE.
